# EUROPEAN PATENT SPECIFICATION

(11) **EP 3 055 525 B1**
(45) Date of publication and mention of the grant of the patent: **29.11.2017**
(21) Application number: 14793301.4
(22) Date of filing: 01.10.2014
(51) Int. Cl.: F01N 3/20

(54) **ADDITIVE SUPPLY DEVICE AND ADDITIVE SUPPLY METHOD FOR ENGINE**
ADDITIVZUGABEVORRICHTUNG UND ADDITIVZUGABEVERFAHREN FÜR EINEN MOTOR
DISPOSITIF D'ALIMENTATION EN ADDITIF ET PROCÉDÉ D'ALIMENTATION EN ADDITIF POUR MOTEUR

(30) Priority: 07.10.2013 JP 2013210307
(43) Date of publication of application: 17.08.2016
(73) Proprietor: TOYOTA JIDOSHA KABUSHIKI KAISHA, Toyota-shi, Aichi-ken 471-8571 (JP); Kabushiki Kaisha Toyota Jidoshokki, Kariya-shi, Aichi-ken 448-8671 (JP)
(72) Inventor: TSUCHIYA, Tomihisa, Toyota-shi Aichi-ken 471-8571 (JP); HOSHI, Sakutaro, Toyota-shi Aichi-ken 471-8571 (JP)
(74) Representative: Intès, Didier Gérard André
(86) International application number: PCT/IB2014/001981
(87) International publication number: WO 2015/052565

(56) References cited:
- EP-A1- 2 573 344
- GB-A- 2 473 134
- US-A1- 2011 225 950

## Description

### BACKGROUND OF THE INVENTION

### 1. Field of the Invention

The invention relates to an additive supply device and an additive supply method for an engine.

### 2. Description of Related Art

A device that supplies an additive into an exhaust gas passage in order to purify the exhaust gas of an engine is available. For example, in the device described in Japanese Patent Application Publication No. 2008-248710 (JP 2008-248710 A), aqueous urea solution is supplied into an exhaust gas passage in order to reduce nitrogen oxides (NOx) contained in the exhaust gas with a catalyst.

When the additive freezes, it is difficult to supply the additive into the exhaust gas passage. Therefore, a heater for heating and thawing the additive is sometimes provided in a pump or a tank constituting the additive supply device, or in an additive supply passage.

In the device described in JP 2008-248710 A, the temperature of the aqueous urea solution in a tank is detected and a tank heater that heats the aqueous urea solution inside the tank is actuated when the temperature is low. As a result, even when the aqueous urea solution is frozen, the thawing thereof is accelerated.

US 2011/225950 discloses a control strategy that selectively controls the heating of fluid lines equipped with line heaters that may be utilized with a selective catalytic reduction system.

In a device which is not provided with a sensor that directly detects the temperature of the aqueous urea solution, the tank heater can be actuated based on an intake air temperature, which is detected by an intake air temperature sensor, as the indicator of the aqueous urea solution temperature.

The intake air temperature sensor is provided close to the engine, for example, inside an engine compartment. By contrast, the aqueous urea solution tank is often provided at a distance from the engine, for example, outside the engine compartment, due to the installation space required therefor. For this reason, a difference easily occurs between the temperature detected by the intake air temperature sensor and the actual temperature of aqueous urea solution. Therefore, even when the operation of the tank heater is controlled on the basis of the detection temperature of the intake air temperature sensor, the heater sometimes may not be adequately actuated.

### SUMMARY OF THE INVENTION

The invention provides an additive supply device and an additive supply method for an engine, which make it possible to actuate adequately a heater for heating and thawing the additive.

A first aspect of the invention provides an additive supply device for an engine, the additive supply device including: an additive supply system, a heater, an intake air temperature sensor and a heating control unit. The additive supply system is positioned outside of an engine compartment, the additive supply system includes: a tank that stores an additive; a pump that pumps the additive located inside the tank; a supply passage that supplies the additive pumped by the pump to an exhaust gas passage of the engine. The heater heats the additive inside the additive supply system. The intake air temperature sensor is positioned inside the engine compartment and configured to detect an intake air temperature of the engine. The heating control unit is configured to: (i) actuate the heater when the detected intake air temperature is low, and stop the actuation of the heater when the detected intake air temperature rises, and (ii) continue the actuation of the heater when a condition under which the detected intake air temperature and the temperature of the additive inside the additive supply system have deviated from each other is fulfilled during the actuation of the heater (i. e. travel speed of a vehicle is equal to or lower than a first predetermined speed during the actuation of the heater).

The temperature of the engine compartment rises under the effect of heat radiated from the engine during the engine operation. Therefore, the intake air temperature detected by the intake air temperature sensor disposed inside the engine compartment easily increases. By contrast, the temperature of the additive inside the additive supply system disposed outside the engine compartment hardly increases. Therefore, a difference can occur between the intake air temperature detected by the intake air temperature sensor and the temperature of the additive inside the additive supply system.

With the additive supply device, when the condition under which the intake air temperature detected by the intake air temperature sensor and the temperature of the additive inside the additive supply system have deviated from each other is fulfilled, the actuation of the heater that heats the additive is continued. Therefore, the actuation of the heater can be prevented from being erroneously stopped when the detection value of the intake air temperature increases due to radiation heat from the engine even if the actual temperature of the additive is low. For this reason, with the additive supply device, the heater, which should prevent the additive from freezing, can be adequately actuated.

In the additive supply device, the engine may be mounted on a vehicle, and the heating control unit may be configured to continue the actuation of the heater under an assumption that the condition is fulfilled when the travel speed of the vehicle is equal to or lower than a predetermined speed.

In a vehicle on which an engine is mounted, the air that is the engine atmosphere is retained in the engine compartment when the travel speed is low and the flow rate of the traveling wind is low, or when the traveling wind is absent because the vehicle is stopped. As a result the temperature around the engine easily rises. In such a case, the intake air temperature detected by the intake air temperature sensor also rises and the intake air temperature can deviate from the additive temperature. With the additive supply device, it can be properly determined that the additive temperature and the intake air temperature detected by the intake air temperature sensor have deviated from each other on the basis that the vehicle travels at a low speed or has been stopped. Thus, the heater can be adequately actuated on the basis of such determination.

The additive supply device may further include an exhaust gas temperature control unit configured to execute temperature raising control of raising an exhaust gas temperature of the engine, wherein the heating control unit may be configured to set the predetermined speed higher when the temperature raising control is executed than when the temperature raising control is not executed.

The temperature around the engine easily rises and the intake air temperature detected by the intake air temperature sensor also easily rises when the temperature raising control is executed and the exhaust gas temperature rises. Therefore, the flow rate of the traveling wind necessary to reduce sufficiently the effect of the radiation heat of the engine can be said to be also large. With the additive supply device, by setting the predetermined speed higher when the temperature raising control is executed, it is possible to expand the speed range in which the actuation of the heater is to be continued to a higher speed side. As a result, the actuation of the heater can be reliably prevented from being erroneously stopped, and therefore the heater can be actuated more adequately.

The control of raising the exhaust gas temperature of the engine in order to restore the functions of the exhaust gas purification device that purifies the engine exhaust gas can be used as the temperature raising control. In the additive supply device, the engine, as drive source, may be mounted on a vehicle, and the heating control unit may be configured to continue the actuation of the heater under an assumption that the condition is fulfilled when the revolution speed of an output shaft of the engine is equal to or lower than a predetermined speed.

In a vehicle equipped with an engine as a drive source, the revolution speed of the output shaft of the engine most often decreases when the vehicle is stopped or travels at a low speed. With the additive supply device, the state in which the vehicle is stopped or travels at a low speed can be accurately determined on the basis that the revolution speed of the output shaft of the engine has decreased. Therefore, it can be properly determined that the intake air temperature detected by the intake air temperature sensor and the additive temperature have deviated from each other. The heater then can be adequately actuated on the basis of this determination.

The additive supply device may further include an exhaust gas temperature control unit configured to execute temperature raising control of raising the exhaust gas temperature of the engine, wherein the heating control unit may be configured to set the predetermined speed higher when the temperature raising control is executed than when the temperature raising control is not executed.

With the additive supply device, by setting the predetermined speed higher when the temperature raising control is executed, it is possible to expand the vehicle travel speed range in which the actuation of the heater is to be continued to a higher speed side. As a result, the actuation of the heater can be reliably prevented from being erroneously stopped, and therefore the heater can be actuated more adequately.

In the additive supply device, the pump may be of a rotary system, and the heating control unit may be configured to continue the actuation of the heater also when a state, in which a revolution speed of the pump is equal to or lower than a predetermined speed, continues during the actuation of the heater.

As the state of the additive approaches the freezing state, the additive viscosity rises, and the load on the pump that pumps the additive increases. In a rotary pump, the revolution speed of the rotating shaft decreases at a high load. With the additive supply device, the freezing of the additive can be determined from a low revolution speed of the pump and the actuation of the heater can be continued. Therefore, the heater can be adequately actuated and the additive can be prevented from freezing.

In the additive supply device, the deviation of the temperature may be a difference between the intake air temperature and the temperature of the additive inside the additive supply system is equal to or greater than a predetermined difference of the temperature.

Another embodiment, which is not part of the claimed invention, provides an additive supply method for an engine, the engine including an additive supply system positioned outside of an engine compartment, a heater that heats the additive inside the additive supply system, and an intake air temperature sensor that is positioned inside the engine compartment and detects an intake air temperature of the engine, the additive supply method including: (i) actuating the heater when the detected intake air temperature is low, and stopping the actuation of the heater when the detected intake air temperature rises, and (ii) continuing the actuation of the heater when a condition under which the detected intake air temperature and the temperature of the additive inside the additive supply system have deviated from each other is fulfilled during the actuation of the heater.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic drawing showing the entire configuration of one embodiment of the additive supply device for an engine;
FIG. 2 is a schematic drawing showing the configuration of an aqueous urea solution supply mechanism in the same embodiment;
FIG. 3 is a schematic drawing showing a vehicle equipped with the additive supply device of the same embodiment;
FIG. 4 is a flowchart showing the procedure of executing the heater control processing of the same embodiment;
FIG. 5 is a flowchart showing the procedure of executing the heater control processing of a variation example;
FIG. 6 is a flowchart showing the procedure of executing the heater control processing of a variation example;
FIG. 7 is a flowchart showing the procedure of executing the heater control processing of a variation example;
FIG. 8 is a flowchart showing the procedure of executing the heater control processing of a variation example; and
FIG. 9 is a flowchart showing the procedure of executing the heater control processing of a variation example.

### DETAILED DESCRIPTION OF EMBODIMENTS

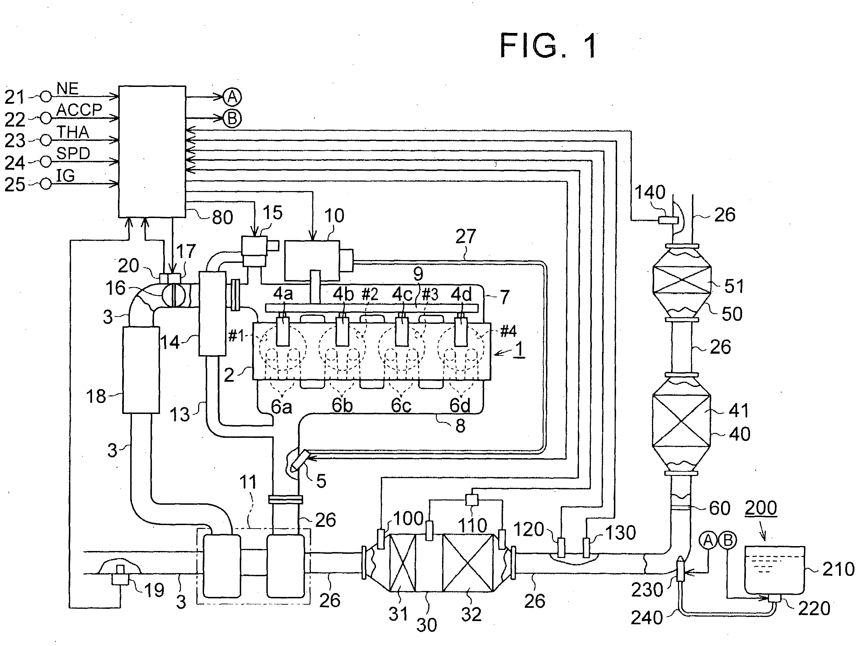

An exemplary embodiment of the additive supply device for an engine will be explained below. FIG. 1 shows a diesel engine (referred to hereinbelow simply as "engine") using the additive supply device of the embodiment, and the peripheral configuration thereof.

An engine 1 is provided with a plurality of cylinders #1 to #4. A plurality of fuel injection valves 4a to 4d is mounted on a cylinder head 2. Those fuel injection valves 4a to 4d inject fuel into combustion chambers of the cylinders #1 to #4. Intake air ports (not shown in the figure) for introducing new air into the cylinders and exhaust gas ports 6a to 6d for discharging combustion gas to the outside of the cylinders are provided in the cylinder head 2 correspondingly to the cylinders #1 to #4.

The fuel injection valves 4a to 4d are connected to a common rail 9 that accumulates high-pressure fuel. The common rail 9 is connected to a supply pump 10. The supply pump 10 sucks in the fuel from a fuel tank and supplies the high-pressure fuel to the common rail 9. The high-pressure fuel in the common rail 9 is injected from the fuel injection valves 4a to 4d into the cylinders when the fuel injection valves 4a to 4d are open.

An intake air manifold 7 is connected to the intake air ports. The intake air manifold 7 is connected to an intake air passage 3. An intake air throttle valve 16 for adjusting the intake air amount is provided inside the intake air passage 3.

The exhaust gas ports 6a to 6d are connected to an exhaust manifold 8. The exhaust manifold 8 is connected to an exhaust gas passage 26. A turbocharger 11 that supercharges the intake air to be introduced into the cylinders by using the exhaust gas pressure is provided in the middle section of the exhaust gas passage 26. An intercooler 18 is provided in the intake air passage 3 between the intake air-side compressor of the turbocharger 11 and the intake air throttle valve 16. The intake air with a temperature raised by supercharging performed by the turbocharger 11 is cooled by the intercooler 18.

A first purification member 30 that purifies the exhaust gas is provided downstream, in the exhaust gas flow direction, of an exhaust gas-side turbine of the turbocharger 11 in the middle section of the exhaust gas passage 26. An oxidation catalyst 31 and a filter 32 are arranged in series with respect to the exhaust gas flow direction inside the first purification member 30.

In the oxidation catalyst 31, a catalyst for oxidation treatment of HC contained in the exhaust gas is supported. The filter 32 is a member for collecting particulate matter (PM) contained in the exhaust gas. The filter is constituted by a porous ceramic. A catalyst for enhancing the oxidation of PM is supported in the filter 32. The PM contained in the exhaust gas is collected when passing through the porous walls of the filter 32.

A fuel addition valve 5 for supplying fuel as an additive to the oxidation catalyst 31 and the filter 32 is provided in the vicinity of a combined section (pipes from each cylinders are combined into one pipe as shown in FIG. 1) of the exhaust manifold 8. The fuel addition valve 5 is connected by a fuel supply pipe 27 to the supply pump 10. The arrangement position of the fuel addition valve 5 can be changed, as appropriate, provided that it is in the exhaust gas system and upstream of the first purification member 30.

Where the amount of PM collected in the filter 32 exceeds a predetermined value, the regeneration treatment of the filter 32 is started, and the fuel is injected from the fuel addition valve 5 toward the interior of the exhaust manifold 8. Where the fuel injected from the fuel addition valve 5 reaches the oxidation catalyst 31 and burned. Thus, the exhaust gas temperature is raised. The exhaust gas with a temperature raised in the oxidation catalyst 31 flows into the filter 32. As a result, the temperature of the filter 32 is raised. Thus, the PM deposited on the filter 32 is oxidized and the filter 32 is regenerated. In the embodiment, this regeneration treatment corresponds to the temperature raising control performed to raise the exhaust gas temperature of the engine 1.

A second purification member 40 that purifies the exhaust gas is provided downstream, in the flow direction of the exhaust gas, of the first purification member 30 in the middle section of the exhaust gas passage 26. A NOx catalyst (referred to hereinbelow as "SCR catalyst") 41 of a selective reduction type that reduces and purifies NOx contained in the exhaust gas by using a reducing agent is arranged inside the second purification member 40.

A third purification member 50 that purifies the exhaust gas is provided downstream, in the flow direction of the exhaust gas, of the second purification member 40 in the middle section of the exhaust gas passage 26. An ammonia oxidation catalyst 51 for purifying ammonia contained in the exhaust gas is arranged inside the third purification member 50.

The engine 1 is provided with aqueous urea solution supply mechanism 200 that supplies the reducing agent to the SCR catalyst 41. The aqueous urea solution supply mechanism 200 is constituted by a tank 210 storing aqueous urea solution as an additive, an urea addition valve 230 that injects the aqueous urea solution into the exhaust gas passage 26, a supply passage 240 connecting the urea addition valve 230 with the tank 210, and a pump 220 provided in the middle section of the supply passage 240.

The urea addition valve 230 is provided in the exhaust gas passage 26 between the first purification member 30 and the second purification member 40. The injection port of the urea addition valve 230 faces the SCR catalyst 41. When the urea addition valve 230 is opened, the aqueous urea solution is injected into the exhaust gas passage 26 through the supply passage 240.

The pump 220 is an electric pump. The aqueous urea solution is pumped from the tank 210 toward the urea addition valve 230 during the direct rotation of the pump. Meanwhile, during the reverse rotation of the pump, the aqueous urea solution is pumped from the urea addition valve 230 into the tank 210. In other words, during the reverse rotation of the pump 220, the aqueous urea solution is recovered from the urea addition valve 230 and the supply passage 240 and returned to the tank 210.

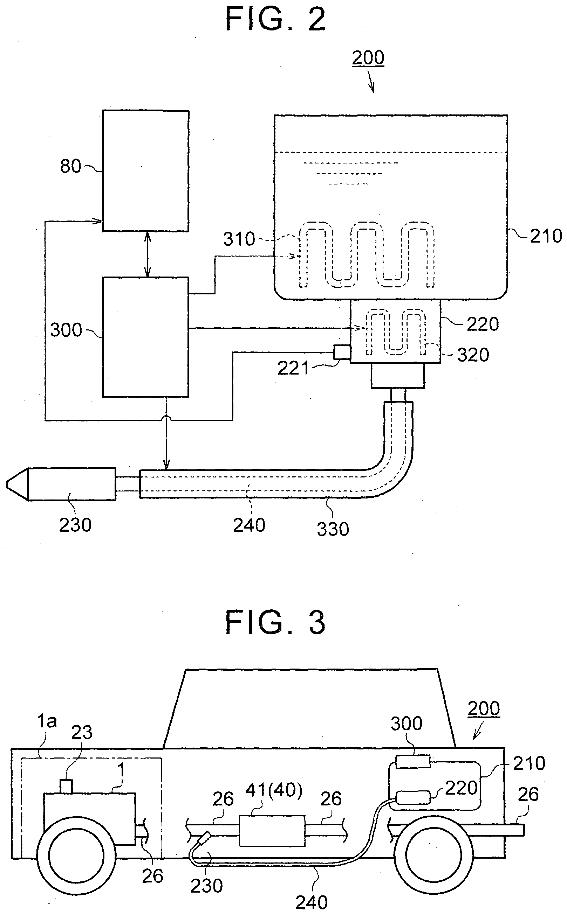

As shown in FIG. 2, in the embodiment, the pump 220 is provided on the bottom surface of the tank 210. The pump 220 may be provided at a location close to the bottom surface on the side surface of the tank 210. The pump 220 is provided with a revolution speed sensor 221 that detects the pump revolution speed NEP which is the revolution speed of the rotating shaft of the pump 220.

A tank heater 310 that heats the aqueous urea solution is provided inside the tank 210. A pump heater 320 that heats the aqueous urea solution is provided inside the pump 220. A passage heater 330 that heats the aqueous urea solution is also provided on the outer periphery of the supply passage 240. The heaters 310, 320, 330 are electric heaters connected to a heater control device 300. The heater control device 300 performs heater control of switching between the state of energizing the heaters 310, 320, and 330 and the energization cut-off state. The heater control device 300 communicates with an electronic control unit 80 (which is described below). In the embodiment, the heater control device 300 corresponds to the heating control unit.

As shown in FIG. 1, a dispersion plate 60 that enhances atomization of the aqueous urea solution by dispersing the aqueous urea solution injected from the urea addition valve 230 is provided inside the exhaust gas passage 26 between the urea addition valve 230 and the SCR catalyst 41.

The aqueous urea solution injected form the urea addition valve 230 is hydrolyzed by the heat of the exhaust gas and converted into ammonia. The ammonia is supplied as a reducing agent for NOx into the SCR catalyst 41. The ammonia supplied to the SCR catalyst 41 is absorbed by the SCR catalyst 41 and used for NOx reduction.

The engine 1 is also provided with an exhaust gas recirculation (EGR) device. The EGR device decreases the combustion temperature inside the cylinders and reduces the generation amount of NOx by introducing part of the exhaust gas (the so-called EGR gas) into the intake air. The EGR device includes an EGR passage 13 that communicates the intake air passage 3 with the exhaust manifold 8, an EGR valve 15 provided in the EGR passage 13, an EGR cooler 14, and the like. The EGR amount introduced from the exhaust gas passage 26 into the intake air passage 3, that is, the EGR amount, is adjusted by adjusting the opening degree of the EGR valve 15. The temperature of the exhaust gas flowing inside the EGR passage 13 is lowered by the EGR cooler 14.

Various sensors that detect the engine operation state are provided to the engine 1. For example, an air flow meter 19 detects the intake air amount GA inside the intake air passage 3. A throttle valve opening degree sensor 20 detects the opening degree of the intake air throttle valve 16. An engine revolution speed sensor 21 detects the revolution speed of the output shaft of the engine 1, that is, the engine revolution speed NE. An acceleration sensor 22 detects the depression amount of an accelerator pedal, that is, an accelerator operation amount ACCP. An intake air temperature sensor 23 detects an intake air temperature THA in the interior portion of the intake air passage 3 upstream, in the flow direction of the intake air, of the turbocharger 11. A vehicle speed sensor 24 detects the travel speed of the vehicle equipped with the engine 1, that is, a vehicle speed SPD. An ignition switch 25 detects a start operation and a stop operation of the engine 1 performed by the driver of the vehicle.

A first exhaust gas temperature sensor 100 provided upstream, in the flow direction of the exhaust gas, of the oxidation catalyst 31 detects a first exhaust gas temperature TH1 which is the exhaust gas temperature before the exhaust gas flows into the oxidation catalyst 31. A pressure difference sensor 110 detects a pressure difference ΔP between the exhaust gas pressure upstream and downstream, in the flow direction of the exhaust gas, of the filter 32.

A second exhaust gas temperature sensor 120 and a first NOx sensor 130 are provided upstream, in the flow direction of the exhaust gas, of the urea addition valve 230 in the exhaust gas passage 26 between the first purification member 30 and the second purification member 40. The second exhaust gas temperature sensor 120 detects a second exhaust gas temperature TH2 which is an exhaust gas temperature before the exhaust gas flows into the SCR catalyst 41. The first NOx sensor 130 detects a first NOx concentration N1 which is a NOx concentration in the exhaust gas before the exhaust gas flows into the SCR catalyst 41.

A second NOx sensor 140 that detects a second NOx concentration N2 which is the NOx concentration of the exhaust gas purified with the SCR catalyst 41 is provided in the exhaust gas passage 26 downstream, in the flow direction of the exhaust gas, of the third purification member 50.

The outputs of those sensors are inputted to the electronic control unit 80. The electronic control unit 80 includes a microcomputer including a central processing device (CPU), a read-only memory (ROM) in which programs and maps have been stored in advance, a random access memory (RAM) that temporarily stores the computation results of the CPU, an input interface, and an output interface. Electric power is supplied to the CPU and the above-described sensors from a battery.

Various types of control of the engine 1 performed by the electronic control unit 80 include, for example, fuel injection amount control and fuel injection timing control of the fuel injection valves 4a to 4d and the fuel addition valve 5, discharge pressure control of the supply pump 10, drive amount control of an actuator 17 opening and closing the intake air throttle valve 16, and opening degree control of the EGR valve 15. The electronic control unit 80 also performs the exhaust gas purification control of various types, such as the regeneration treatment in which the PM collected on the filter 32 is burned.

The electronic control unit 80 also performs, as a type of the exhaust gas purification control, the addition control of the additive added by the urea addition valve 230. In the addition control, the supply amount of urea necessary for reducing the NOx discharged from the engine 1 is calculated. The valve opening state of the urea addition valve 230 is controlled such that the aqueous urea solution is injected from the urea addition valve 230 in the calculated supply amount. Thus, during the operation of the engine 1, the aqueous urea solution is supplied to the exhaust gas passage 26 and the urea is added to the exhaust gas in order to purify the NOx.

The heater control device 300 executes the abovementioned heater control. The heater control is basically executed in the following manner. That is, the intake air temperature THA detected by the intake air temperature sensor 23 is used as an indicator of the aqueous urea solution temperature. When the intake air temperature THA is lower than a predetermined temperature T1 (for example, -3°C), then on the basis that the aqueous urea solution has been frozen or may be frozen at this temperature, the energization via the heater control device 300 is started and the heaters 310, 320, 330 are actuated. Where the intake air temperature THA becomes higher than a predetermined temperature T2 (for example, 0°C) during the operation of the heaters 310, 320, 330, the possibility that the aqueous urea solution has been frozen is low and the possibility that the freezing is induced is also low. Accordingly, the energization of the heaters 310, 320, 330 is cut off and the operation thereof is stopped.

As shown in FIG. 3, the intake air temperature sensor 23 is provided inside an engine compartment 1a where the engine 1 is disposed, and the aqueous urea solution supply mechanism 200 (more specifically, the tank 210, the pump 220, the urea addition valve 230, the supply passage 240, and so on) is provided outside the engine compartment 1a.

In the embodiment, since the temperature of the engine compartment 1a rises during the operation of the engine 1, the intake air temperature THA detected by the intake air temperature sensor 23 located inside the engine compartment 1a easily rises. By contrast, since the aqueous urea solution supply mechanism 200 is provided outside of the engine compartment 1a, the temperature thereof hardly increases during the operation of the engine 1, and the temperature of the aqueous urea solution located inside the aqueous urea solution supply mechanism 200 hardly rises. Therefore, in the embodiment, a difference occurs between the intake air temperature THA detected by the intake air temperature sensor 23 and the aqueous urea solution temperature inside the aqueous urea solution supply mechanism 200.

In the embodiment, when the intake air temperature THA rises, the actuation of the heater 310, 320, 330 is to be stopped. However, where the actuation of the heaters 310, 320, 330 is stopped on the basis that the intake air temperature THA has increased even when the intake air temperature THA and the aqueous urea solution temperature deviate from each other, the actuation of the heaters 310, 320, 330 can be erroneously stopped despite a low aqueous urea solution temperature.

Accordingly, in the embodiment, it is determined that the intake air temperature THA and the aqueous urea solution temperature inside the aqueous urea solution supply mechanism 200 deviate from each other when the vehicle speed SPD is equal to or less than a predetermined speed (in the embodiment, 5 km/h). The operation of the heaters 310, 320, 330 controlled by the heater control device 300 is continued even when the intake air temperature THA is high, when it is determined that the intake air temperature THA and the aqueous urea solution temperature deviate from each other during the operation of the heaters 310,320,330.

The operation caused by such continuing operation of the heaters 310, 320, 330 is explained below. When the vehicle speed SPD is low and the flow rate of the traveling wind is low, or when the traveling wind is absent because the vehicle is stopped, the air that is the atmosphere of the engine 1 is retained in the engine compartment 1a. As a result, the temperature inside the engine compartment 1a easily rises and the temperature around the engine 1 also easily rises. In such a case, the intake air temperature THA detected by the intake air temperature sensor 23 disposed inside the engine compartment 1a also rises. Therefore, a deviation can occur between the intake air temperature THA and the aqueous urea solution temperature inside the aqueous urea solution supply mechanism 200 disposed outside the engine compartment 1a.

In the embodiment, it is determined that the condition under which the intake air temperature THA and the aqueous urea solution temperature have deviated from each other is fulfilled when the vehicle speed SPD is equal to or lower than a predetermined speed. Therefore, it can be properly determined that the intake air temperature THA and the aqueous urea solution temperature deviate from each other on the basis that the vehicle travels at a low speed or has been stopped.

Where it is determined that the intake air temperature THA and the aqueous urea solution temperature have deviated from each other, the operation of the heaters 310, 320, 330 is continued without a stop. Therefore, when the intake air temperature THA detected by the intake air temperature sensor 23 is raised by the heat radiated from the engine 1 and the intake air temperature THA and the aqueous urea solution temperature deviate from each other, then the operation of the heaters 310, 320, and 330, which heat the aqueous urea solution, is not stopped. As a result, the actuation of the heaters 310, 320, and 330 can be prevented from being erroneously stopped on the basis that the intake air temperature THA has increased due to the radiation heat of the engine 1, despite the fact that the actual aqueous urea solution temperature is low. Therefore, the heaters 310, 320, 330, which should prevent the aqueous urea solution from freezing, can be adequately actuated.

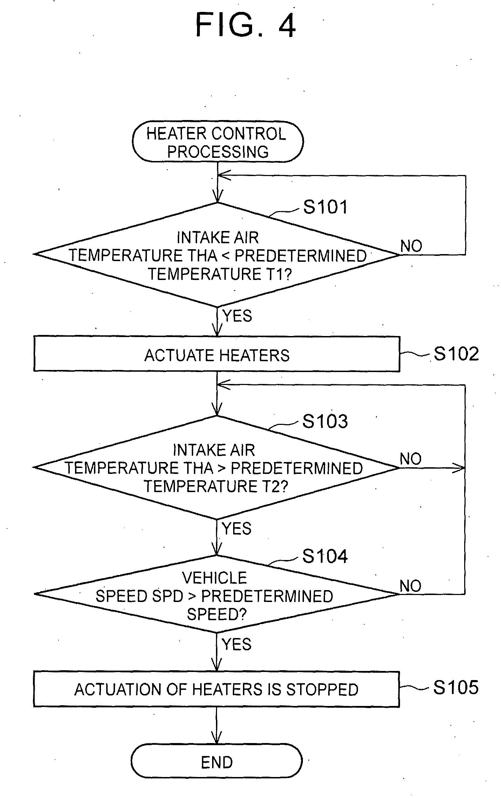

The execution procedure of the processing relating to such heater control (heater control processing) is explained below in greater detail. FIG. 4 shows the execution procedure of the heater control processing. The series of operations shown in the flowchart in FIG. 4 schematically represents the execution procedure of the heater control processing. The actual processing is executed by the heater control device 300.

As shown in FIG. 4, in the processing, it is initially determined whether or not the intake air temperature THA is lower than the predetermined temperature T1 (step S101). When the intake air temperature THA is equal to or higher than the predetermined temperature T1 (step S101: NO), the determination is repeated every predetermined period until the intake air temperature THA becomes lower than the predetermined temperature T1 (YES in step S101).

When the intake air temperature THA is lower than the predetermined temperature T1 (step S101: YES), the heaters 310, 320, and 330 are energized and actuated (step S102). In the subsequent steps, the processing of determining whether or not the intake air temperature THA has become higher than a predetermined temperature T2 (step S103) and the processing of determining whether or not the vehicle speed SPD is higher than a predetermined speed (step S104) are executed.

Where it is determined that the intake air temperature THA is equal to or lower than the predetermined temperature T2 (step S103: NO), it is assumed that the aqueous urea solution temperature has not risen sufficiently because of a low temperature of the atmosphere of the aqueous urea solution supply mechanism 200, and the actuation of the heaters 310, 320, 330 is continued.

Meanwhile, when the vehicle speed SPD is equal to or lower than the predetermined speed (step S104: NO) even when the intake air temperature THA has become higher than the predetermined temperature T2 (step S103: YES), it is assumed that the condition under which the intake air temperature THA and the aqueous urea solution temperature have deviated from each other is fulfilled, and the actuation of the heaters 310, 320, 330 is continued.

Further, where the intake air temperature THA has become higher than the predetermined temperature T2 (step S103: YES) and it is determined that the vehicle speed SPD is higher than the predetermined speed (step S104: YES), the actuation of the heaters 310, 320, 330 is stopped (step S105). In this case, it can be properly determined that the aqueous urea solution temperature is high on the basis that the possibility of the intake air temperature THA and the aqueous urea solution temperature deviating from each other is low and the intake air temperature THA is high, and the actuation of the heaters 310, 320, 330 is stopped.

As explained hereinabove, the below-described effects can be obtained with the embodiment. (1) When the condition under which the intake air temperature THA and the aqueous urea solution temperature have deviated from each other is fulfilled, the actuation of the heaters 310, 320, 330 is continued. Therefore, the heaters 310, 320, and 330, which should prevent the aqueous urea solution from freezing, can be adequately actuated.

(2) The actuation of the heaters 310, 320, 330 is continued under an assumption that the condition under which the intake air temperature THA and the aqueous urea solution temperature have deviated from each other is fulfilled when the vehicle speed SPD is equal to or lower than the predetermined speed. Therefore, it can be properly determined that the intake air temperature THA and the aqueous urea solution temperature have deviated from each other on the basis that the vehicle travels at a low speed or has been stopped, and the heaters 310, 320, 330 can be adequately actuated on the basis of this determination.

The embodiment may be implemented with the following changes. The predetermined temperatures T1 and T2 can be changed at random (however, T1 ≤ T2), provided that the aqueous urea solution can be accurately prevented from freezing.

The predetermined speed (step S104) of the heater control processing (FIG. 4) can be changed at random, provided that proper determined is made that the intake air temperature THA and the aqueous urea solution temperature have deviated from each other.

The predetermined speed (step S104) of the heater control processing (FIG. 4) is not limited to a constant speed and can be set variably according to whether or not the aforementioned regeneration processing is executed. More specifically, when the regeneration processing is executed, the predetermined speed may be set higher than when the regeneration processing is not executed. When the regeneration processing is executed and the exhaust gas temperature has increased, the temperature around the engine 1 easily rises and the intake air temperature THA detected by the intake air temperature sensor 23 also easily rises. Therefore, it can be said that the flow rate of the traveling air necessary to reduce sufficiently the effect of the radiation heat of the engine 1 is also large. With the above-described device, as a result of setting a high predetermined speed during the execution of the regeneration processing, the stopping of the actuation of the heaters 310, 320, 330 is prohibited and a range of vehicle speed SPD in which the actuation is continued can be expanded to a high speed side. As a consequence, the actuation of the heaters 310, 320, 330 can be accurately prevented from being stopped. Therefore, the heaters 310, 320, 330 can be adequately actuated. The operation effects same as those of the above-described device can be obtained not only when the predetermined speed is set to change according to whether or not the regeneration processing is executed, but also when the predetermined speed is set to change according to whether or not the temperature raising control, by which the exhaust gas temperature of the engine 1 is raised, is executed.

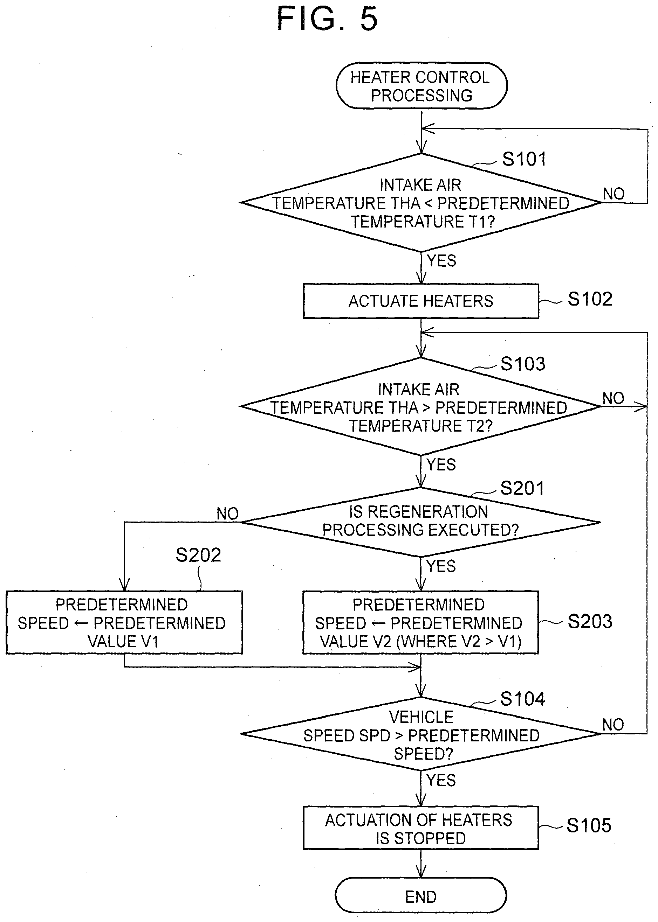

FIG. 5 shows a specific example of such heater control processing. Among the processing steps shown in the flowchart in FIG. 5, the processing steps same as those shown in FIG. 4 are assigned with same reference numerals and detailed explanation thereof is herein omitted. As shown in FIG. 5, in this processing, where the intake air temperature THA becomes higher than a predetermined temperature T2 (step S103: YES) during the actuation of the heaters 310, 320, 330 (step S101: YES), it is determined whether or not the regeneration processing is executed (step S201). Where the regeneration processing is not executed (step S201: NO), a predetermined value V1 (for example, 5 km/h) is set as the predetermined speed (step S202). Meanwhile, where the regeneration processing is executed (step S201: YES), a predetermined value V2 (for example, 10 km/h; V2 > V1) is set as the predetermined speed (step S203). Then, the operation of the heaters 310, 320, 330 is stopped (step S105), provided that the vehicle speed SPD is higher than the predetermined speed (step S104: YES).

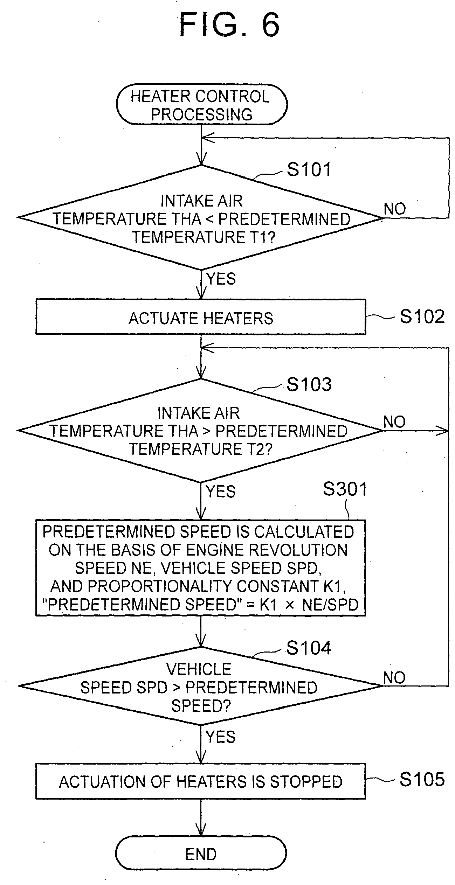

The predetermined speed in the processing of step S104 of the heater control processing (FIG. 4) may be set variably according to the relationship between the vehicle speed SPD and the engine revolution speed NE. FIG. 6 shows a specific example of such heater control. Among the processing steps shown in the flowchart in FIG. 6, the processing steps same as those shown in FIG. 4 are assigned with same reference numerals and detailed explanation thereof is herein omitted. As shown in FIG. 6, in this processing, where the intake air temperature THA becomes higher than the predetermined temperature T2 (step S103: YES) during the actuation of the heaters 310, 320, 330 (step S101: YES), the predetermined speed is calculated by a calculation equation ("Predetermined Speed = K1 x NE/SPD) on the basis of the engine revolution speed NE, vehicle speed SPD, and a preset proportionality constant K1 (step S301). Then, the operation of the heaters 310, 320, 330 is stopped (step S105), provided that the vehicle speed SPD is higher than the predetermined speed (step S104: YES).

Even when the vehicle speed SPD is the same, during high-load operation with a high engine revolution speed NE, the exhaust gas temperature is higher than that during low-load operation at a low engine revolution speed NE. Therefore, the intake air temperature THA detected by the intake air temperature sensor 23 easily rises and the intake air temperature THA easily deviates from the aqueous urea solution temperature. With the above-described device, since the predetermined speed can be set according to such a relationship between the vehicle speed SPD, engine revolution speed NE, and exhaust gas temperature, it can be properly determined that the intake air temperature THA and the aqueous urea solution temperature have deviated from each other. The heaters 310, 320, and 330, which should prevent the aqueous urea solution from freezing, can be adequately actuated on the basis of such a determination. Such calculation of the predetermined speed, which is based on the vehicle speed SPD and engine revolution speed NE, may be performed using a calculation map instead of using the calculation equation.

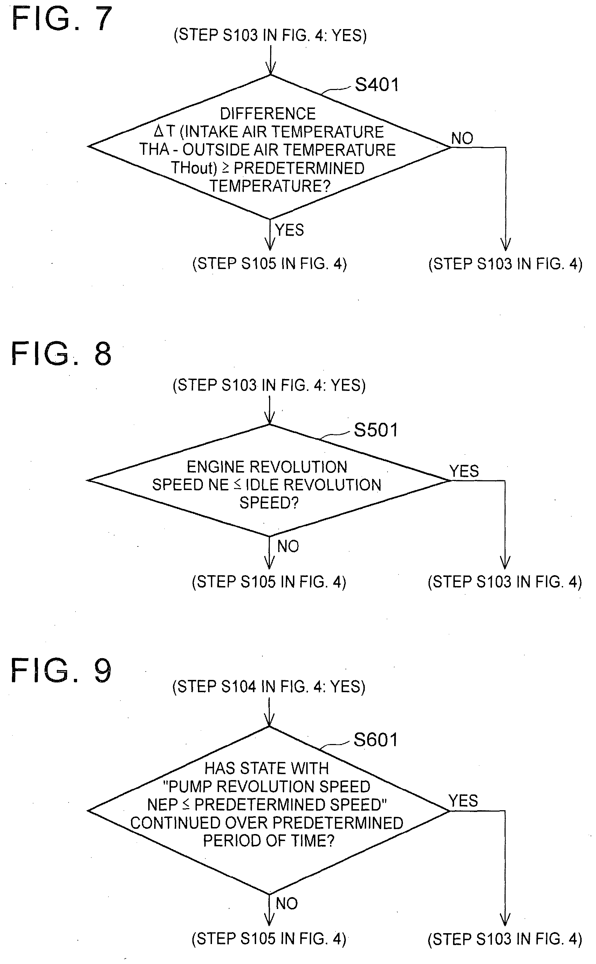

A condition under which the difference ΔT (THA - THout) between the intake air temperature THA and the outside air temperature THout is equal to or higher than a predetermined temperature (for example, 5°C) (step S401: NO), as shown in FIG. 7, may be used instead of the condition under which the vehicle speed SPD is equal to or less than the predetermined speed (step S104 in FIG. 4: NO) as a condition for continuing the actuation of the heaters 310, 320, 330. With such a device, the outside air temperature THout can be used as an indicator for the atmosphere of the aqueous urea solution supply mechanism 200 provided outside of the engine compartment 1a, and it can be accurately determined that the intake air temperature THA and the aqueous urea solution temperature have deviated from each other on the basis that the difference between the outside air temperature THout and the intake air temperature THA has increased. Further, in such a device, it is desirable that the outside air temperature sensor, which detects the outside air temperature THout, be provided outside of the engine compartment 1a or inside the engine compartment 1a, but at a location that is not likely to receive the radiation heat of the engine 1.

A condition under which the engine revolution speed NE is equal to or lower than an idle revolution speed (for example, 800 rpm) (step S501: NO), as shown in FIG. 8, may be used instead of the condition under which the vehicle speed SPD is equal to or less than the predetermined speed (step S104 in FIG. 4: NO) as a condition for continuing the actuation of the heaters 310, 320, 330. In this case, when the engine revolution speed NE is equal to or lower than the idle revolution speed, it is highly probable that the vehicle speed SPD is very low. With the above-described device, it can be determined that the vehicle travels at a low speed or has been stopped on the basis of the engine revolution speed NE being equal to or lower than the idle revolution speed, and this determination makes it possible to determine properly that the intake air temperature THA and the aqueous urea solution temperature have deviated from each other. A condition under which the engine revolution speed NE is equal to or lower than a predetermined speed, which is somewhat higher than the idle revolution speed (engine revolution speed NE ≤ predetermined speed), may be set instead of the condition under which the engine revolution speed NE is equal to or lower than the idle revolution speed.

The comparison value (idle revolution speed or predetermined speed) to be compared with the engine revolution speed NE is not limited to a constant speed and can be set variably according to whether or not the aforementioned regeneration processing is executed. More specifically, where the aforementioned regeneration processing is executed, the comparison value may be set to a speed higher than that when the regeneration processing is not executed. With such a device, by setting the comparison value to a high speed when the regeneration processing is executed, it is possible to expand the range of the engine revolution speed NE and also the range of the vehicle speed SPD in which the actuation of the heaters 310, 320, 330 is continued to a high speed side. As a result, the actuation of the heaters 310, 320, 330 can be accurately prevented from being erroneously stopped, and therefore the heaters 310, 320, 330 can be adequately actuated.

A condition under which the state in which the pump revolution speed NEP is equal to or lower than a predetermined speed continues over a predetermined period of time may be set instead of or in addition to the condition under which the vehicle speed SPD is equal to or less than the predetermined speed (step S104 in FIG. 4: NO) as a condition for continuing the actuation of the heaters 310, 320, and 330. A speed lower than the lower limit of the speed range in which the pump revolution speed NEP can be attained when the aqueous urea solution has not been frozen can be set as the predetermined speed.

Since the viscosity of aqueous urea solution rises as the frozen state thereof is approached, a load on the pump 220 pumping the aqueous urea solution increases. When the load on the pump 220 is high, the pump revolution speed NEP decreases. With the above-described device, it can be determined that the aqueous urea solution is frozen on the basis that the pump revolution speed NEP is low, and the actuation of the heaters 310, 320, and 330 can be continued. Therefore, the heaters 310, 320, and 330 can be adequately actuated and the aqueous urea solution can be prevented from freezing.

FIG. 9 shows the execution procedure of the heater control of a variation example including such a condition. As shown in FIG. 9, in this processing, where the vehicle speed SPD is higher than the predetermined speed (step S104 in FIG. 4: YES), it is determined whether or not the state in which the pump revolution speed NEP is equal to or lower than the predetermined speed has been continued (step S601). Where the state in which the pump revolution speed NEP is equal to or lower than the predetermined speed has been continued over a predetermined period of time (step S601: YES), the actuation of the heaters 310, 320, 330 is continued without a stop. Meanwhile, where the continuation time of the state in which the pump revolution speed NEP is equal to or lower than the predetermined speed is less than the predetermined period of time or when the pump revolution speed NEP is higher than the predetermined speed (step S601: NO), the actuation of the heaters 310, 320, 330 is stopped (step S105 in FIG. 4).

When the intake air temperature THA is lower than the predetermined temperature T1 (step S101 in FIG. 4: YES), the actuation of the heaters 310, 320, 330 may be started (step S102), and where the outside air temperature THout is higher than the predetermined temperature T2, the actuation of the heaters 310, 320, 330 may be stopped. Where the outside air temperature sensor detecting the outside air temperature THout fails during the actuation of the heaters 310, 320, 330, the actuation of the heaters 310, 320, 330 may be continued.

A condition in which the following [Condition 1] to [Condition 4] are combined, as appropriate, may be also set as a condition for continuing the actuation of the heaters 310, 320, 330.
[Condition 1] The vehicle speed SPD is equal to or lower than a predetermined speed.
[Condition 2] The difference ΔT (THA - THout) between the intake air temperature THA and the outside air temperature THout is equal to or higher than a predetermined temperature.
[Condition 3] The engine revolution speed NE is equal to or lower than a predetermined speed.
[Condition 4] The state in which the pump revolution speed NEP is equal to or lower than a predetermined speed is continued over a predetermined period of time.

Where the state in which the conditions are fulfilled is continued over a predetermined period of time, the actuation of the heaters 310, 320, 330 may be continued. In the embodiment, the electric heaters are used as the heaters (tank heater 310, pump heater 320, and passage heater 330) for heating the aqueous urea solution. A medium path that enables heating with a heating medium (for example, the cooling water or lubricating oil of the engine 1) may be provided, for example, for the pump 220, the supply passage 240, or the tank 210, as another heater. With such a device, the heater is actuated by causing the heating medium to circulate in the medium path, and the actuation of the heater is stopped by stopping the circulation of the heating medium.

The additive supply device of the embodiment can be also realized as a device in which any one of the tank heater 310, the pump heater 320, and the passage heater 330 is not provided, or a device in which any two of the heaters are not provided.

The aqueous urea solution is used as the additive, by other additives may be also used.

## Claims

1. An additive supply device for an engine (1), the engine (1) being mounted on a vehicle, the additive supply device comprising:
an additive supply system (200) positioned outside of an engine compartment (1a), the additive supply system (200) including:
a tank (210) storing an additive;
a pump (220) configured to pump the additive located inside the tank (210);
a supply passage (240) supplying the additive pumped by the pump (220) to an exhaust gas passage (26) of the engine (1); and
a heater (310, 320, 330) configured to heat the additive inside the additive supply system (200);
an intake air temperature sensor (23) positioned inside the engine compartment (1a), the intake air temperature sensor (23) configured to detect an intake air temperature of the engine (1); and
**characterized by** comprising a heating control unit (300) configured to:
actuate the heater (310, 320, 330) when the detected intake air temperature is low, and stop an actuation of the heater (310, 320, 330) when the detected intake air temperature rises; and
continue the actuation of the heater (310, 320, 330) when a travel speed of the vehicle is equal to or lower than a first predetermined speed during the actuation of the heater (310, 320, 330).

2. The additive supply device according to claim 1, further comprising
an exhaust gas temperature control unit (80) configured to execute temperature raising control of raising an exhaust gas temperature of the engine (1), wherein
the heating control unit (300) is configured to set the first predetermined speed higher when the temperature raising control is executed than when the temperature raising control is not executed.

3. The additive supply device according to claim 1, wherein
the engine (1), as drive source, is mounted on the vehicle, and
the heating control unit (300) is configured to continue the actuation of the heater (310, 320, 330) when a revolution speed of an output shaft of the engine (1) is equal to or lower than a second predetermined speed.

4. The additive supply device according to claim 3, further comprising:
an exhaust gas temperature control unit (80) configured to execute temperature raising control of raising the exhaust gas temperature of the engine (1), wherein
the heating control unit (300) is configured to set the second predetermined speed higher when the temperature raising control is executed than when the temperature raising control is not executed.

5. The additive supply device according to any one of claims 1 to 4, wherein
the pump (220) is of a rotary system, and
the heating control unit (300) is configured to continue the actuation of the heater (310, 320, 330) when a revolution speed of the pump (220) is equal to or lower than a third predetermined speed during the actuation of the heater (310, 320, 330).

## Patentansprüche

1. Additivzuführvorrichtung für einen Motor (1), wobei der Motor (1) an einem Fahrzeug angebracht ist, wobei die Additivzuführvorrichtung umfasst:
ein Additivzuführsystem (200), das außerhalb eines Motorraums (1a) angeordnet ist, wobei das Additivzuführsystem (200) umfasst:
einen Tank (210), der ein Additiv aufnimmt,
eine Pumpe (220), die dazu ausgebildet ist, das Additiv, das innerhalb des Tanks (210) angeordnet ist, zu pumpen,
einen Zuführkanal (240), der das Additiv, das durch die Pumpe (220) gepumpt wird, einem Abgaskanal (26) des Motors (1) zuführt, und
eine Heizvorrichtung (310, 320, 330), die dazu ausgebildet ist, das Additiv innerhalb des Additivzuführsystems (200) zu erwärmen,
einen Einlasslufttemperatursensor (23), der innerhalb des Motorraums (1a) angeordnet ist, wobei der Einlasslufttemperatursensor (23) dazu ausgebildet ist, eine Einlasslufttemperatur des Motors (1) zu detektieren, und
**dadurch gekennzeichnet, dass** sie eine Heizungssteuereinheit (300) umfasst, die dazu ausgebildet ist:
die Heizvorrichtung (310, 320, 330) zu aktivieren, wenn die detektierte Einlasslufttemperatur niedrig ist, und eine Aktivierung der Heizvorrichtung (310, 320, 330) zu stoppen, wenn die detektierte Einlasslufttemperatur ansteigt, und
die Aktivierung der Heizvorrichtung (310, 320, 330) fortzusetzen, wenn während der Aktivierung der Heizvorrichtung (310, 320, 330) eine Fahrgeschwindigkeit des Fahrzeugs kleiner gleich einer ersten vorgegebenen Geschwindigkeit ist.

2. Additivzuführvorrichtung nach Anspruch 1, ferner umfassend:
eine Abgastemperaturregeleinheit (80), die dazu ausgebildet ist, Temperaturerhöhungsregelung zum Erhöhen einer Abgastemperatur des Motors (1) durchzuführen, wobei
die Heizungssteuereinheit (300) dazu ausgebildet ist, die erste vorgegebene Geschwindigkeit höher einzustellen, wenn die Temperaturerhöhungsregelung durchgeführt wird, als wenn die Temperaturerhöhungsregelung nicht durchgeführt wird.

3. Additivzuführvorrichtung nach Anspruch 1, wobei
der Motor (1) als Antriebsquelle an dem Fahrzeug angebracht ist und
die Heizungssteuereinheit (300) dazu ausgebildet ist, die Aktivierung der Heizvorrichtung (310, 320, 330) fortzusetzen, wenn eine Drehgeschwindigkeit einer Ausgangswelle des Motors (1) kleiner gleich einer zweiten vorgegebenen Geschwindigkeit ist.

4. Additivzuführvorrichtung nach Anspruch 3, ferner umfassend:
eine Abgastemperaturregeleinheit (80), die dazu ausgebildet ist, Temperaturerhöhungsregelung zum Erhöhen der Abgastemperatur des Motors (1) durchzuführen, wobei
die Heizungssteuereinheit (300) dazu ausgebildet ist, die zweite vorgegebene Geschwindigkeit höher einzustellen, wenn die Temperaturerhöhungsregelung durchgeführt wird, als wenn die Temperaturerhöhungsregelung nicht durchgeführt wird.

5. Additivzuführvorrichtung nach einem beliebigen der Ansprüche 1 bis 4, wobei
die Pumpe (220) ein Rotationssystem ist und
die Heizungssteuereinheit (300) dazu ausgebildet ist, die Aktivierung der Heizvorrichtung (310, 320, 330) fortzusetzen, wenn während der Aktivierung der Heizvorrichtung (310, 320, 330) eine Drehgeschwindigkeit der Pumpe (220) kleiner gleich einer dritten vorgegebenen Geschwindigkeit ist.

## Revendications

1. Dispositif d'alimentation en additif pour un moteur (1), le moteur (1) étant monté sur un véhicule, le dispositif d'alimentation en additif comportant :
un système d'alimentation en additif (200) positionné à l'extérieur d'un compartiment moteur (1a), le système d'alimentation en additif (200) comprenant :
un réservoir (210) qui stocke un additif ;
une pompe (220) configurée pour pomper l'additif qui se trouve à l'intérieur du réservoir (210) ;
un passage d'alimentation (240) qui délivre l'additif pompé par la pompe (220) à un passage de gaz d'échappement (26) du moteur (1) ; et
un dispositif de chauffage (310, 320, 330) configuré pour chauffer l'additif à l'intérieur du système d'alimentation en additif (200) ;
un capteur de température d'air d'admission (23) positionné à l'intérieur du compartiment moteur (1a), le capteur de température d'air d'admission (23) étant configuré pour détecter une température d'air d'admission du moteur (1) ; et
**caractérisé en ce qu'**il comporte une unité de commande de chauffage (300) configurée pour :
actionner le dispositif de chauffage (310, 320, 330) quand la température d'air d'admission détectée est basse, et arrêter un actionnement du dispositif de chauffage (310, 320, 330) quand la température détectée d'air d'admission s'élève ; et
poursuivre l'actionnement du dispositif de chauffage (310, 320, 330) quand une vitesse de déplacement du véhicule est égale ou inférieure à une première vitesse prédéterminée pendant l'actionnement du dispositif de chauffage (310, 320, 330).

2. Dispositif d'alimentation en additif selon la revendication 1, comportant en outre
une unité de commande de température de gaz d'échappement (80) configurée pour exécuter une commande d'élévation de température pour élever une température de gaz d'échappement du moteur (1), dans lequel
l'unité de commande de chauffage (300) est configurée pour rendre la première vitesse prédéterminée plus élevée quand la commande d'élévation de température est exécutée que quand la commande d'élévation de température n'est pas exécutée.

3. Dispositif d'alimentation en additif selon la revendication 1, dans lequel
le moteur (1), comme source d'entraînement, est monté sur le véhicule, et
l'unité de commande de chauffage (300) est configurée pour poursuivre l'actionnement du dispositif de chauffage (310, 320, 330) quand une vitesse de rotation d'un axe de sortie du moteur (1) est égale ou inférieure à une deuxième vitesse prédéterminée.

4. Dispositif d'alimentation en additif selon la revendication 3, comportant en outre :
une unité de commande de température de gaz d'échappement (80) configurée pour exécuter une commande d'élévation de température pour élever la température de gaz d'échappement du moteur (1), dans lequel
l'unité de commande de chauffage (300) est configurée pour rendre la deuxième vitesse prédéterminée plus élevée quand la commande d'élévation de température est exécutée que quand la commande d'élévation de température n'est pas exécutée.

5. Dispositif d'alimentation en additif selon l'une quelconque des revendications 1 à 4, dans lequel
la pompe (220) est un système rotatif, et
l'unité de commande de chauffage (300) est configurée pour poursuivre l'actionnement du dispositif de chauffage (310, 320, 330) quand une vitesse de rotation de la pompe (220) est égale ou inférieure à une troisième vitesse prédéterminée pendant l'actionnement du dispositif de chauffage (310, 320, 330).
